# EUROPEAN PATENT APPLICATION

(11) **EP 2 020 662 A2**
(43) Date of publication of application: **04.02.2009**
(21) Application number: 08158627.3
(22) Date of filing: 19.06.2008
(51) Int. Cl.: H01F 13/00, H02K 15/03, C22C 38/10

(54) **Assembly and method for magnetization of permanent magnet rotors in electrical machines**

(30) Priority: 03.07.2007 US 773019
(71) Applicant: GENERAL ELECTRIC COMPANY, Schenectady, NY 12345 (US)
(72) Inventor: Stephens, Charles Michael, Pattersonville, NY 12137 (US); Kaminski, Christopher Anthony, Schenectady, NY 12309 (US); Weeber, Konrad Roman, Rexford, NY 12148 (US); Yagielski, John Russell, Scotia, NY 12302 (US)
(74) Representative: Illingworth-Law, William Illingworth

(57) **Abstract**

A magnetizer (10) for a rotor (12) of an electrical machine is provided. The magnetizer includes a magnetizing yoke (16) and coils (18, 20, 22, 24) wound around the magnetizing yoke. The magnetizing yoke includes multiple pole-pieces (34, 36, 38, 40, 42, 44, 46, 48) extending therefrom, and at least some of the pole-pieces include a cobalt alloy.

## Description

### BACKGROUND

The subject matter disclosed herein relates generally to electrical machines, particularly to electrical machines having permanent magnet type rotors. Specific embodiments relate to an assembly and method for magnetization of permanent magnet segments in such rotors.

An electrical machine generally includes a rotor disposed within a stator and is used either as a motor to convert electrical power to mechanical power or as a generator to convert mechanical power to electrical power. Certain electrical machines use permanent magnet type rotors that reduce the size and enhance the overall efficiency of the machine. A permanent magnet rotor generally includes an annular permanent magnet disposed over a rotor spindle. In certain embodiments, the permanent magnet is a monolithic hollow cylindrical member. In larger machines, the permanent magnet is generally formed by assembling a plurality of permanent magnets around a rotor spindle. High-speed electrical machines may also include a holding ring or a retaining ring around the permanent magnet assembly to prevent fracturing and scattering of the permanent magnet assembly by centrifugal forces.

The permanent magnet segments are often magnetized prior to assembly on the rotor spindle. In one technique, the permanent magnet segments are cut and shaped from larger unfinished magnet blocks, after which the segments are magnetized individually in a solenoid coil. In some applications, especially in larger machines, magnetization of the permanent magnet segments is achieved via a magnetization vector proposed by K. Halbach (also known as Halbach magnetization), which, when applied to the surface of the permanent magnets, results in a more sinusoidal shaped flux distribution within the electrical machine, thereby reducing AC harmonic losses and reducing torque ripple, vibration, and acoustic noise. The permanent magnet segments are subsequently bonded to the rotor spindle.

Assembly of rotors from pre-magnetized permanent magnet segments is often a cumbersome process, especially in larger electrical machines, as it may involve substantial forcing and aligning to position and restrain the energized permanent magnet segments.

A technique for one-step magnetization has been disclosed in commonly assigned Stephens US20060220484. However, it would still be desirable to have a simpler and more efficient technique for magnetization of the electrical machine rotors.

### BRIEF DESCRIPTION

Briefly, in accordance with one embodiment, a magnetizer for a rotor of an electrical machine is provided. The magnetizer comprises a magnetizing yoke comprising multiple pole-pieces extending therefrom. At least some of the pole-pieces comprise a cobalt alloy. The magnetizer also comprises a plurality of coils wound around the pole pieces.

In another embodiment, a method of magnetizing a rotor of an electrical machine is provided. The method comprises assembling a plurality of magnets around a rotor spindle and positioning a magnetizer circumferentially around the plurality of magnets. The magnetizer comprises at least one cobalt alloy pole-piece.

### DRAWINGS

These and other features, aspects, and advantages of the present invention will become better understood when the following detailed description of embodiments provided by way of example only is read with reference to the accompanying drawings in which like characters represent like parts throughout the drawings, wherein:

FIG. 1 illustrates an exemplary embodiment for a magnetizer for magnetizing a rotor;

FIG. 2 illustrates an exemplary embodiment showing a cross-sectional view of a magnetizer adapted for a small sized rotor;

FIG. 3 illustrates another exemplary embodiment showing a cross-sectional view of a magnetizer adapted for a large sized rotor; and

FIG. 4 illustrates a cross-sectional view of exemplary magnetizing coils for a magnetizer.

### DETAILED DESCRIPTION

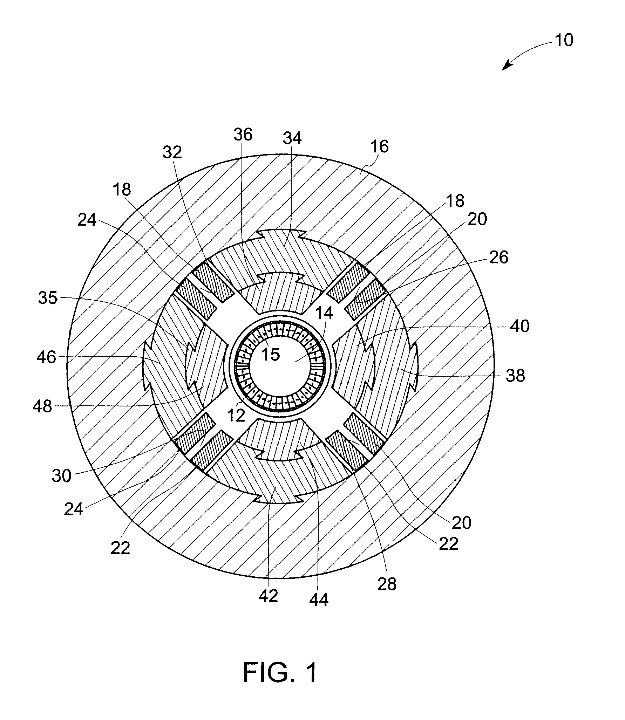

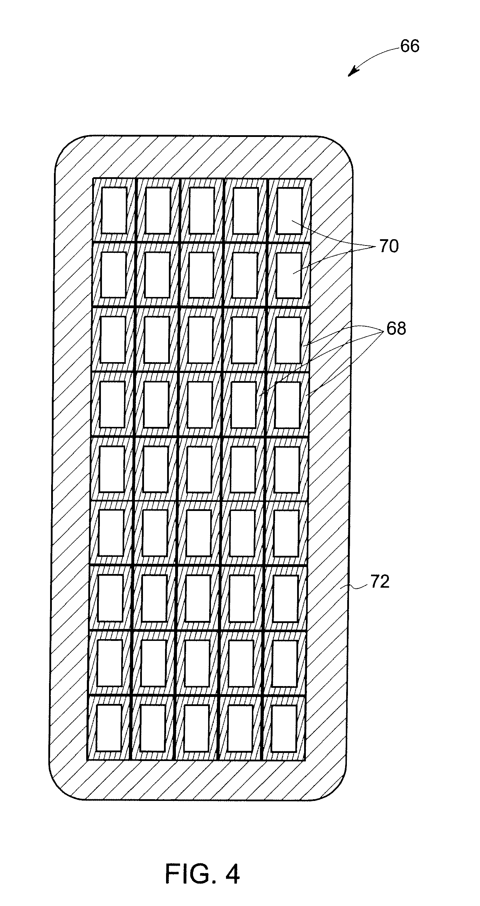

The embodiments disclosed herein provide an assembly and method for magnetizing an electrical machine rotor. A simple magnetization method is provided for an entire assembled rotor in a multi-pole magnetizer. FIG. 1 illustrates a magnetizing fixture 10 (herein referenced as a "magnetizer") for a rotor 12 of an electrical machine. Magnetizer 10 comprises a magnetizing yoke 16 (or "core") which comprises a plurality of pole-pieces 34, 38, 42, and 46 extending therefrom and a plurality of magnetizing (or "excitation") coils 18, 20, 22, and 24 wound around the pole-pieces of the magnetizing yoke. In a first embodiment, at least some of the plurality of pole-pieces comprise a cobalt alloy. In a second embodiment, the plurality of coils comprise hollow tube coils (described in more detail with reference to FIG. 4) configured to allow a flow of a coolant therethrough. In a third embodiment, the pole-pieces each comprise a fixed pole-piece portion 34 and an interchangeable pole-piece portion 36 physically coupled to the fixed pole-piece portion. The interchangeable pole-piece portions are of different dimensions to adapt to different sized rotors. The first, second, and third embodiments may be used individually or combined in any desired manner.

Magnetizer 10 is used, for example, for magnetizing the permanent magnet rotors of high-speed electric motors. When magnetizer 10 incorporates interchangeable components, magnetizer 10 may be used with different rotor diameters. FIG. 1 illustrates a rotor 12 that is securely positioned around a rotor spindle 14 for magnetization of the rotor's permanent magnet segments 15 by the magnetizer 10. In one example, the permanent magnet segments 15 are situated in a Halbach arrangement wherein each magnetic pole of the rotor is formed from several magnets pieces and wherein the orientations of the magnet pieces are progressively swept from radially tangential at the sides of the pole to radially normal at the center of the pole.

The magnetizing yoke 16 may comprise any structurally suitable material capable of use in magnetizing the rotor. In one example, yoke 16 comprises steel laminations. Although there are some advantages expected from fabricating both the yoke and the pole-pieces from a cobalt alloy, such embodiments are expensive. A steel yoke in combination with cobalt alloy pole-pieces results in a structure expected to provide more efficient magnetization than all-steel structures and at less expense than all-cobalt alloy structures.

Magnetizing coils 18, 20, 22, and 24 may comprise any appropriate electrically conductive material, for example copper and a more specific example being provided in the discussion of FIG. 4 below. The number of magnetizing coils is generally chosen to be equal to the number of poles of the rotor. Although four poles and four coils are illustrated, any suitable number may be used. The coils 18, 20, 22 and 24 are energized by a power source (not shown). When energized, the magnetizing coils 18, 20, 22, and 24 produce a magnetic flux through the magnetizing poles that magnetizes the rotor 12.

As described above, the magnetizing poles may be integral to the yoke but are more typically fabricated from separate pole-pieces. In a more specific embodiment, the magnetizing poles each comprise a fixed pole-piece 34, 38, 42, or 46 coupled to the magnetizing yoke 16 and an interchangeable pole-piece 36, 40, 44, or 48 coupled to a respective fixed pole-piece 34, 38, 42, and 46. These embodiments are for example only. In other embodiments, the interchangeable pole-pieces may be coupled directly to the yoke or may be coupled to integral fixed pole-pieces (not shown) extending from the yoke, for example. Coupling may be by any appropriate approach with one illustrated embodiment including keys and slots, shown generally by reference numeral 35. In an exemplary embodiment these fixed pole-pieces and the interchangeable pole-pieces comprise a cobalt alloy. The pole-pieces may also be shaped to magnetize Halbach magnet arrangements in the rotor.

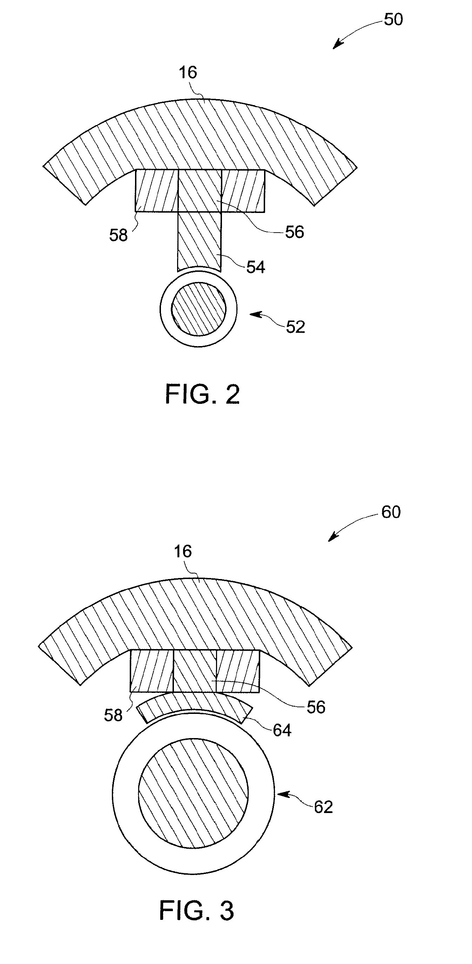

FIG. 2 and FIG. 3 illustrate two exemplary embodiments showing partial cross-sectional views of example segments of magnetizer 10 used for different sized rotors. Differently sized interchangeable pole-pieces are provided for the appropriate rotor diameter. FIG. 2 illustrates a cross-sectional view 50 that illustrates a yoke portion 16 and a small diameter rotor 52. The interchangeable or replaceable pole-piece is shown by reference numeral 54 and the fixed pole-piece is shown by reference numeral 56. The coil is shown by the reference numeral 58.

FIG. 3 similarly illustrates a cross-sectional view 60 of another exemplary embodiment of the magnetizer 10 used for a large diameter rotor 62. The interchangeable pole-piece 54 of FIG. 2 is replaced by the pole-piece 64 to accommodate a large sized rotor. The fixed pole-piece 56 and the coil 58 are same as shown in FIG. 2. The multi-sizing feature of the magnetizer (by virtue of interchangeable pole-pieces) reduces manufacturing capital investment, since most of the fixture can be commonly used over the different sizes of rotors of any electrical machine product line. FIG. 2 and FIG. 3 illustrate racetrack shaped coils 58, however other suitable shaped coils such as but not limited to saddle coils as shown in FIG. 1 may be used.

In one embodiment, the fixed and interchangeable pole-pieces as described in FIGs. 1-3 are fabricated from cobalt alloy laminations. In one exemplary embodiment, the cobalt alloy is a cobalt-iron alloy that has a greater flux density capability than conventional steel laminations and therefore increases the magnetization effect on the permanent magnets of the rotor. The cobalt alloy in one specific example comprises 49% cobalt, 49% iron, and 2% vanadium with respect to a total weight of the cobalt alloy. In another example, the cobalt alloy comprises cobalt in a range of 48 weight percent to 50 weight percent, vanadium in a range of one weight percent to two weight percent, and balance iron. In another example the cobalt alloy comprises cobalt in a range of from about 45 weight percent to about 55 weight percent with respect to the total weight of the cobalt alloy. In another example, the cobalt alloy further comprises iron in a range of from about 45 weight percent to about 55 weight percent with respect to the total weight of the cobalt alloy. In another example, the cobalt alloy comprises vanadium a range of from about 1 weight percent to about 4 weight percent with respect to the total weight of the cobalt alloy.

In another embodiment hollow tube coils are used to allow a flow of a coolant as shown in FIG. 4. In a more specific example, the hollow tube coils 66 include copper conductors 68 that carry a liquid coolant such as water, oil, or a cryogenic fluid such as liquid nitrogen or liquid neon 70 as the coolant. The conductors have thin turn insulation layers (not shown) around each conductor 68 and a coil side insulation 72. The cooling lowers the coil resistance and minimizes the power source requirement.

The different embodiments of the magnetizer as described herein provide improved magnetization of an electrical machine rotor. The magnetizer described herein can be used for a wide range of electrical machinery, including motors, and particularly including large high-speed synchronous machines for gas line compressors, aerospace motors, aerospace generators, marine propulsion motors, marine power generators among others.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A magnetizer (10) for a rotor (12) of an electrical machine, the magnetizer comprising:
a magnetizing yoke (16), wherein the magnetizing yoke comprises a plurality of pole-pieces (34, 36, 38, 40, 42, 44, 46, 48) extending therefrom, at least some of the plurality of pole-pieces comprising a cobalt alloy; and
a plurality of coils (18, 20, 22, 24)wound around the pole-pieces.

2. The magnetizer of claim 1, wherein the cobalt alloy comprises 49% cobalt, 49% iron, and 2% vanadium with respect to a total weight of the cobalt alloy.

3. The magnetizer of claim 1, wherein the cobalt alloy comprises cobalt in a range of from 40 weight percent to 60 weight percent with respect to the total weight of the cobalt alloy and iron in a range of from about 40 weight percent to about 60 weight percent with respect to the total weight of the cobalt alloy.

4. The magnetizer of claim 1, wherein the cobalt alloy comprises cobalt in a range of 48 weight percent to 50 weight percent with respect to the total weight of the cobalt alloy, vanadium in a range of one weight percent to two weight percent with respect to the total weight of the cobalt alloy, and balance iron.

5. The magnetizer of any one of the preceding claims wherein each of the pole-piece comprising the cobalt alloy comprises:
a fixed pole-piece portion (34, 38, 42, 46); and
an interchangeable pole-piece portion (36, 40, 44, 48) physically coupled to the fixed pole-piece, wherein at least the interchangeable pole-piece portion comprises the cobalt alloy.

6. The magnetizer of any one of the preceding claims, wherein the magnetizing yoke (16) comprises a material different from the material of the pole-pieces (34, 36, 38, 40, 42, 44, 46, 48).

7. The magnetizer of claim 6 wherein the yoke material comprises steel.

8. The magnetizer of any one of the preceding claims, wherein the plurality of coils comprise hollow tube coils (68) configured to allow a flow of a coolant therethrough.

9. The magnetizer of claim 8 wherein the hollow tube coils comprise copper coils.

10. The magnetizer of claim 8 further comprising liquid nitrogen situated in the hollow tube coils.

11. A magnetizer for a rotor of an electrical machine, the magnetizer comprising:
a magnetizing yoke comprising steel, and
a plurality of interchangeable pole-pieces extending from the magnetizing yoke, at least some of the plurality of interchangeable pole-pieces comprising a cobalt alloy; and
a plurality of coils wound around the interchangeable pole-pieces.

12. A magnetizer for a rotor of an electrical machine, the magnetizer comprising:
a magnetizing yoke, wherein the magnetizing yoke comprises a plurality of pole-pieces extending therefrom; and
a plurality of coils wound around the pole-pieces, wherein the plurality of coils comprise hollow tube coils configured to allow a flow of a coolant therethrough.

13. A method of magnetizing a rotor of an electrical machine, comprising:
assembling a plurality of magnets around a rotor spindle; and
positioning a magnetizer circumferentially around the plurality magnets array, the magnetizer comprising at least one cobalt alloy pole-piece.

14. The method of claimn 13, wherein the rotor comprises a plurality of rotors with at least some of the rotors comprising different diameters as compared with others of the rotors.

15. The method of claim 14, further comprising, when magnetizing a rotor with a different diameter than the preceding rotor, interchanging the at least one cobalt alloy pole-piece with another at least one cobalt alloy pole-piece having a different dimension.
